# EUROPEAN PATENT APPLICATION

(11) **EP 4 631 780 A1**
(43) Date of publication of application: **15.10.2025**
(21) Application number: 22969481.5
(22) Date of filing: 26.12.2022
(51) Int. Cl.: B60N 2/12, B60N 2/36

(54) **METHOD, APPARATUS AND DEVICE FOR CONTROLLING VEHICLE HEATING SYSTEM, AND VEHICLE AND STORAGE MEDIUM**

(71) Applicant: Shenzhen Yinwang Intelligent Technologies Co., Ltd., Shenzhen, Guangdong 518110 (CN)
(72) Inventor: LI, Jinming, Shenzhen, Guangdong 518129 (CN); XU, Hao, Shenzhen, Guangdong 518129 (CN); SUN, Jian, Shenzhen, Guangdong 518129 (CN); LI, Qingmeng, Shenzhen, Guangdong 518129 (CN); ZHAO, Cong, Shenzhen, Guangdong 518129 (CN)
(74) Representative: Pfenning, Meinig & Partner mbB
(86) International application number: PCT/CN2022/142032
(87) International publication number: WO 2024/138324

(57) **Abstract**

Embodiments of this application disclose a seat assembly, a seat and a control method therefor, a control device, and a transportation means, and pertain to the field of mechatronics technologies. The seat includes a base (10), a seat cushion bracket (20), a backrest bracket (30), and a connecting rod (40). The backrest bracket (30) is rotatably connected to the base (10). The seat cushion bracket (20) can move relative to the base (10) in a direction close to or away from the backrest bracket (30). One end of the connecting rod (40) is rotatably connected to the seat cushion bracket (20) at a second joint. The second joint is close to a front edge (20b). The other end of the connecting rod (40) is rotatably connected to the base (10). The seat assembly can be used in various vehicles including an intelligent vehicle, a connected vehicle, or a new energy vehicle. This helps reduce an overall height of the seat after a backrest is folded down, reduce occupied space in the vehicle, increase space for passenger movement, and reduce obstruction of another passenger's field of vision.

## Description

### TECHNICAL FIELD

This application relates to the field of mechatronics technologies, and in particular, to a seat assembly, a seat and a control method therefor, a control device, and a transportation means.

### BACKGROUND

A transportation means is an indispensable part of modern people's life. As times change and science and technology advance, there are more transportation means available to people, bringing great convenience to everyone's life.

Common transportation means include a vehicle, an airplane, a ship, and the like. The vehicle is used as an example. Different quantities of seats are disposed in different vehicles based on different passenger capacities. For example, in a sedan, a driver seat, a front passenger seat, and several rear seats are arranged.

With development of the automobile industry, while a vehicle seat meets safety and functionality requirements, a passenger has higher demands for ride comfort, and expects more space for movement in the vehicle and a wider field of view. For example, folding down a backrest of a front seat onto a seat cushion can increase space for passenger movement, and eliminate obstruction of a field of view, thereby effectively improving ride experience and ride comfort of a rear seat passenger. However, the backrest is usually not flat to better support the back of a human body. For example, a protrusive lumbar support is disposed at a position close to the waist of the human body, and side wings are further disposed on both sides of a backrest of a bucket seat. As a result, even if the backrest is folded down onto a seat cushion, an overall height of the seat is still large, and large space is occupied.

### SUMMARY

This application provides a seat assembly, a seat and a control method therefor, a control device, and a transportation means, to overcome a problem in a related technology. The technical solution is as follows.

According to a first aspect, a seat assembly is provided. The seat assembly includes a base, a seat cushion bracket, a backrest bracket, and a connecting rod. The backrest bracket is rotatably connected to the base, so that an angle of the backrest bracket can be adjusted relative to the base. The seat cushion bracket has a front edge and a rear edge that are opposite to each other, and the rear edge is close to the backrest bracket. The seat cushion bracket is movably connected to the base, and the seat cushion bracket can move relative to the base in a direction close to or away from the backrest bracket. A first joint between the seat cushion bracket and the base is close to the rear edge. One end of the connecting rod is rotatably connected to the seat cushion bracket. A second joint between the connecting rod and the seat cushion bracket is close to the front edge. The other end of the connecting rod is rotatably connected to the base.

Based on the foregoing features, the seat cushion bracket and the backrest bracket can independently move relative to the base, so that a backrest of a seat better fits the back of a passenger. When the backrest needs to be folded down, the seat cushion bracket may move in the direction away from the backrest bracket, to increase a distance between a seat cushion and the backrest, so that specific space is reserved between the seat cushion and the backrest. When the backrest is folded down, a structure such as a lumbar support on the backrest may be accommodated in the space reserved. This helps fold down the backrest. In addition, this further helps reduce an overall height of the seat after the backrest is folded down, reduce occupied space in a vehicle, increase space for passenger movement, and reduce obstruction of another passenger's field of view.

In some examples, the base includes two support plates that are disposed opposite to each other. The support plate is provided with a guide sliding groove, and a length direction of the guide sliding groove is the same as a moving direction of the seat cushion bracket. The seat cushion bracket is located between the two support plates. A first connecting shaft is disposed on a side that is of the seat cushion bracket and that is close to the support plate. The first connecting shaft is located in the guide sliding groove.

Based on the foregoing features, the support plate, the connecting rod and the seat cushion bracket from a three-connecting-rod mechanism. When the seat cushion bracket moves, the first connecting shaft moves in the guide sliding groove, thereby limiting a movement range of the seat cushion bracket, so that the seat cushion bracket can move along the guide sliding groove. In addition, a manner that the first connecting shaft corporates with the guide sliding groove is used, so that during rotation of the connecting rod, the seat cushion bracket can be driven to move along the guide sliding groove, and can also rotate relative to the base around the first connecting shaft.

Optionally, the support plate includes a main body portion and a connecting portion.

The guide sliding groove is located on the main body portion, and the connecting portion is connected to one side edge of the main body portion. The backrest bracket is hingedly connected to the connecting portion. The main body portion plays a role of supporting the seat cushion bracket, and the connecting portion facilitates mounting of the backrest bracket.

In an example, the connecting portion is provided with a connecting hole. The backrest bracket is connected to a second connecting shaft, and the second connecting shaft is inserted into the connecting hole, so that the backrest bracket can rotate relative to the base around the second connecting shaft.

Optionally, the base further includes a first sliding rail. The first sliding rail is connected to the support plate. The first sliding rail is connected to the support plate, so that the seat assembly can move relative to a vehicle by using the first sliding rail, thereby adjusting a position of a seat in the vehicle.

In some examples, the length direction of the guide sliding groove is parallel to or at an acute angle with the first sliding rail. By changing an included angle between the guide sliding groove and the first sliding rail, a moving track of the seat cushion bracket can be changed, and a height of the seat cushion bracket can be adjusted. The included angle herein specifically is a minimum positive angle formed between the guide sliding groove and the first sliding rail.

In another example, the base includes support plates and a bottom plate. The two support plates are located on a same surface of the bottom plate, and the support plates are perpendicularly connected to the bottom plate. The bottom plate is disposed to make a structure of the base more stable. When the seat assembly is mounted in the vehicle, the bottom plate can be fastened on floor in the vehicle, so that the seat assembly is firmly connected to the vehicle.

Optionally, the length direction of the guide sliding groove is parallel to or at an acute angle with the bottom plate. By changing an included angle between the guide sliding groove and the bottom plate, a moving track of the seat cushion bracket can be changed, and a height of the seat cushion bracket can be adjusted. The included angle herein specifically is a minimum positive angle formed between the guide sliding groove and the bottom plate.

In a possible example, the base further includes a second sliding rail. The second sliding rail is located on a surface that is of the bottom plate and that is away from the support plate, and is connected to the bottom plate.

Based on the foregoing features, when the seat assembly is mounted in the vehicle, the second sliding rail can be selected for mounting, thereby adjusting the position of the seat in the vehicle.

Optionally, the seat assembly further includes a first driving mechanism. The first driving mechanism is connected to the connecting rod through transmission, and the first driving mechanism is configured to drive the connecting rod to rotate relative to the base. The first driving mechanism is disposed to drive the connecting rod, to facilitate adjustment of the seat cushion bracket.

Optionally, the seat assembly further includes a second driving mechanism. The second driving mechanism is connected to the backrest bracket through transmission, and the second driving mechanism is configured to drive the backrest bracket to rotate relative to the base. The second driving mechanism is disposed to drive the backrest bracket, to drive the backrest bracket to rotate relative to the base, thereby facilitating adjustment of an angle of the backrest.

For example, both the first driving mechanism and the second driving mechanism include a motor, and are driven by using electric power, thereby facilitating control of a seat.

According to a second aspect, a seat is provided. The seat includes a seat cushion pad, a backrest cushion pad, and the seat assembly according to the first aspect. The seat cushion pad is connected to the seat cushion bracket, and the backrest cushion pad is connected to the backrest bracket. Based on the foregoing features, when a backrest is folded down, the seat cushion bracket first moves in a direction away from the backrest bracket, so that large space is reserved at a rear edge of the seat cushion bracket. After the backrest is folded down, a protrusive part on a surface of the backrest cushion pad is just located in the space reserved at the rear edge of the seat cushion bracket. This helps reduce an overall height of the seat after the backrest is folded down.

According to a third aspect, a seat control method is provided. The method includes: controlling a seat cushion bracket of a first seat to move relative to a base in a direction away from a backrest bracket, where the first seat is the seat according to the second aspect; and controlling the backrest bracket of the first seat to rotate in a direction close to the seat cushion bracket, to enable a backrest cushion pad and a seat cushion pad of the first seat to be opposite to each other. This method can control the first seat to be folded, so that a backrest of the first seat is folded down, and an overall height of the seat after the backrest is folded down is reduced.

Optionally, the control method further includes: controlling the first seat to move forward or move backward in a transportation means. That is, the first seat is controlled to translate, to facilitate use of the seat.

In an example, for a device that includes both the first seat and a second seat, the control method further includes:
controlling a backrest bracket of the second seat to rotate in a direction away from a seat cushion bracket, where the second seat is the seat according to the second aspect; and controlling the seat cushion bracket of the second seat to move relative to a base in a direction close to the backrest bracket. This method can control the first seat to be folded down, and can control the second seat to be unfolded.

According to a fourth aspect, a seat control apparatus is provided. The seat control apparatus includes a seat control module. The seat control module is configured to perform the control method according to the third aspect. The seat control module is configured to: control a seat cushion bracket of a first seat to move relative to a base in a direction away from a backrest bracket, where the first seat is the seat according to the second aspect; and control the backrest bracket of the first seat to rotate in a direction close to the seat cushion bracket, to enable a backrest cushion pad and a seat cushion pad of the first seat to be opposite to each other.

Optionally, the seat control module is further configured to control the first seat to translate. That is, the first seat is controlled to translate, to facilitate use of the seat.

In an example, for a device that includes both the first seat and a second seat, the seat control module is further configured to: control a backrest bracket of the second seat to rotate in a direction away from a seat cushion bracket, where the second seat is the seat according to the second aspect; and control the seat cushion bracket of the second seat to move relative to a base in a direction close to the backrest bracket.

In an example, the seat control module is a function module in a vehicle-mounted computer. In another example, the seat control module may also be a function module in a controller configured to control the seat.

According to a fifth aspect, a transportation means is provided. The transportation means includes at least one seat according to the second aspect. The transportation means may be, but is not limited to, a vehicle, an airplane, and a ship.

According to a sixth aspect, a control device is provided. The control device includes a processor and a memory. The memory is configured to store a software program, and the processor runs or executes the software program stored in the memory, to enable the control device to implement the method according to the third aspect.

According to a seventh aspect, a computer-readable storage medium is provided. The computer-readable storage medium is configured to store program code executed by a processor, and the program code includes instructions used to implement the method according to the third aspect.

According to an eighth aspect, a computer program product is provided. The computer program product includes program code. When a computer runs the computer program product, the computer is enabled to perform the method according to the third aspect.

### BRIEF DESCRIPTION OF DRAWINGS

FIG. 1 is a diagram of a structure of a seat assembly according to an embodiment of this application;
FIG. 2 is a diagram of a movement process of a seat assembly according to an embodiment of this application;
FIG. 3 is a side view of a seat assembly according to an embodiment of this application;
FIG. 4 is a diagram of a structure of a first sliding rail according to an embodiment of this application;
FIG. 5 is a side view of a seat assembly according to an embodiment of this application;
FIG. 6 is a side view of a seat assembly according to an embodiment of this application;
FIG. 7 is a side view of a seat assembly according to an embodiment of this application;
FIG. 8 is a side view of a seat assembly according to an embodiment of this application;
FIG. 9 is a diagram of a structure of a seat assembly according to an embodiment of this application;
FIG. 10 is a diagram of a structure of a seat according to an embodiment of this application;
FIG. 11 is a flowchart of a seat control method according to an embodiment of this application;
FIG. 12 is a flowchart of a seat control method according to an embodiment of this application; and
FIG. 13 is a diagram of a structure of a control device according to an embodiment of this application.

### DESCRIPTION OF EMBODIMENTS

Terms used in an implementation part of this application are merely used to explain embodiments of this application, and are not intended to limit this application. Unless otherwise defined, technical terms or scientific terms used in the descriptions of the implementations of this application should be common meanings understood by a person of ordinary skill in the art to which this application pertains. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. "Connection", "link" or the like is not limited to a physical or mechanical connection, but may include an electrical connection, whether directly or indirectly. Terms such as "up", "down", "left", and "right" merely indicate a relative positional relationship. When an absolute position of an object described changes, the relative positional relationship may also change accordingly.

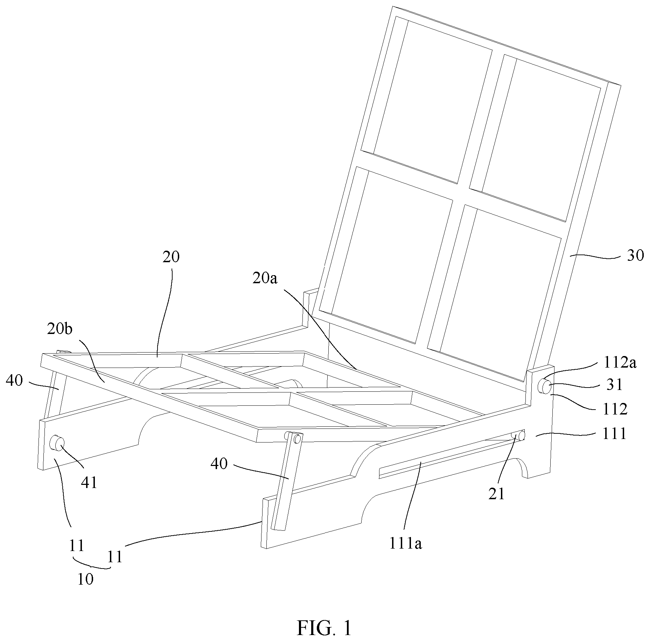

FIG. 1 is a diagram of a structure of a seat assembly according to an embodiment of this application. As shown in FIG. 1, the seat assembly includes a base 10, a seat cushion bracket 20, a backrest bracket 30, and a connecting rod 40.

A seat includes a seat cushion and a backrest. In this embodiment of this application, the seat cushion bracket 20 is of a hard structure that is in the seat cushion of the seat and that bears a load and maintains a form of the seat cushion, and is equivalent to a framework of the seat cushion. The backrest bracket 30 is of a hard structure that is in the backrest of the seat and that bears a load and maintains a form of the backrest, and is equivalent to a framework of the backrest. To ensure sufficient comfort, a cover structure such as leather or cloth is usually disposed on surfaces of the seat cushion bracket 20 and the backrest bracket 30 of the seat. To further improve comfort, flexible fillers may be further filled inside seat cushions and backrests of some seats. The seat cushion bracket 20 may be a part, in the seat cushion, from which the cover structure and the flexible filler are removed, and the backrest bracket 30 may be a part, in the backrest, from which the cover structure and the flexible filler are removed. For example, both the seat cushion bracket 20 and the backrest bracket 30 are made of metal materials, for example, stainless steel and aluminum alloy.

The backrest bracket 30 is rotatably connected to the base 10, and the backrest bracket 30 can rotate relative to the base 10, to adjust an angle of the backrest bracket 30.

The seat cushion bracket 20 has a rear edge 20a close to the backrest bracket 30 and a front edge 20b opposite to the rear edge 20a. When normally using the seat, a passenger sits on the seat cushion, the front edge 20b of the seat cushion bracket 20 is close to passenger's knees, and the rear edge 20a of the seat cushion bracket 20 is close to passenger's hips.

The seat cushion bracket 20 is rectangular or approximately rectangular. The front edge 20b of the seat cushion bracket 20 may be a side edge that is of the seat cushion bracket 20 and that is close to the front of the seat, and the rear edge 20a of the seat cushion bracket 20 may be a side edge that is of the seat cushion bracket 20 and that is close to the rear of the seat.

The seat cushion bracket 20 is movably connected to the base 10, and the seat cushion bracket 20 can move relative to the base 10 in a direction close to or away from the backrest bracket 30. A first joint between the seat cushion bracket 20 and the base 10 is close to the rear edge 20a of the seat cushion bracket 20.

One end of the connecting rod (40) is rotatably connected to the seat cushion bracket (20) at a second joint. The second joint is close to the front edge (20b) of the seat cushion bracket 20. The other end of the connecting rod (40) is rotatably connected to the base (10).

The seat cushion bracket 20 is separately connected to the base 10 and the connecting rod 40, and the first joint and the second joint are on the seat cushion bracket 20. The first joint is a joint between the seat cushion bracket 20 and the base 10, and the second joint is a joint between the seat cushion bracket 20 and the connecting rod 40. For the first joint and the second joint, the first joint is closer to the rear edge 20a of the seat cushion bracket 20, and the second joint is closer to the front edge 20b of the seat cushion bracket 20. There may be a plurality of first joints. For example, as shown in FIG. 1, there is one first joint, on each of two sides of the seat cushion bracket 20, connected to the base 10. There may also be a plurality of second joints. Similarly, with reference to FIG. 1, there is one second joint on each of the two sides of the seat cushion bracket 20. The seat assembly includes two connecting rods 40. The two connecting rods 40 are disposed on the two sides of the seat cushion bracket 20, and are separately connected to the seat cushion bracket 20 at the second joints.

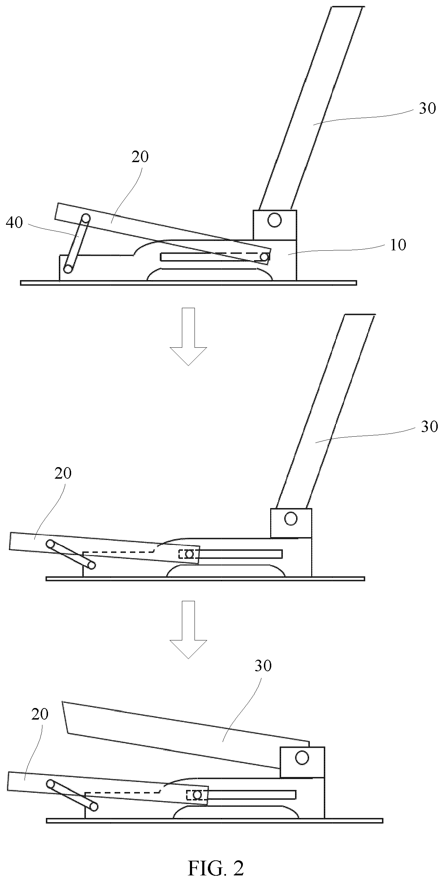

FIG. 2 is a diagram of a movement process of the seat assembly according to an embodiment of this application. As shown in FIG. 2, the seat cushion bracket 20 and the backrest bracket 30 are separately mounted on the base 10, so that the seat cushion bracket 20 and the backrest bracket 30 can independently move relative to the base 10. For example, when the seat cushion bracket 20 remains unchanged, the backrest bracket 30 is rotated relative to the base 10, to adjust the angle of the backrest bracket 30, thereby changing an angle of the backrest of the seat. In this way, the backrest of the seat better fits the back of the passenger.

Because two ends of the connecting rod 40 are respectively rotatably connected to the seat cushion bracket 20 and the base 10, a height of the seat cushion bracket 20 can be changed by rotating the connecting rod 40, and a height of the seat cushion of the seat can also be adjusted, to meet different passenger requirements. In addition, the seat cushion bracket 20 can move relative to the base 10 in the direction close to or away from the backrest bracket 30. Therefore, when the backrest needs to be folded down, the seat cushion bracket 20 may move in the direction away from the backrest bracket 30, to increase a distance between the seat cushion and the backrest, so that specific space is reserved between the seat cushion and the backrest. When the backrest is folded down, a structure such as a lumbar support on the backrest may be accommodated in the space reserved. This helps fold down the backrest. In addition, this further helps reduce an overall height of the seat after the backrest is folded down, reduce occupied space in a vehicle, increase space for passenger movement, and reduce obstruction of another passenger's field of view.

As shown in FIG. 1, the base 10 includes two support plates 11, and the two support plates 11 are disposed opposite to each other. The support plate 11 is provided with a guide sliding groove 111a, and a length direction of the guide sliding groove 111a is the same as a moving direction of the seat cushion bracket 20.

The seat cushion bracket (20) is located between the two support plates (11). A first connecting shaft (21) is disposed on a side that is of the seat cushion bracket (20) and that is close to the support plate (11). The first connecting shaft (21) is located in the guide sliding groove (111a).

The two support plates 11 play a role of supporting the seat cushion bracket 20. The support plate 11 is provided with the guide sliding groove 111a, and the guide sliding groove 111a is configured to limit movement of the seat cushion bracket 20. The first connecting shaft (21) is disposed on the side that is of the seat cushion bracket (20) and that is close to the support plate (11). The first connecting shaft (21) is further located in the guide sliding groove (111a), and the guide sliding groove 111a cooperates with the first connecting shaft 21. When the seat cushion bracket 20 moves, the first connecting shaft 21 moves in the guide sliding groove 111a, thereby limiting a movement range of the seat cushion bracket 20, so that the seat cushion bracket 20 can move along the guide sliding groove 111a. In addition, a manner that the first connecting shaft 21 corporates with the guide sliding groove 111a is used, so that during rotation of the connecting rod 40, the seat cushion bracket 20 can be driven to move along the guide sliding groove 111a, and can also rotate relative to the base 10 around the first connecting shaft 21. In other words, the support plate 11, the connecting rod 40, and the seat cushion bracket 20 are equivalent to a connecting-rod mechanism.

For example, the guide sliding groove 111a is in a clearance fit with the first connecting shaft 21, so that the first connecting shaft 21 can easily move in the guide sliding groove 111a, is subject to small resistance, and stably moves.

In some examples, first connecting shafts 21 may be respectively disposed on the two sides of the seat cushion bracket 20, that is, two first connecting shafts 21 are disposed. The two first connecting shafts 21 are respectively located in guide sliding grooves 111a of the two support plates 11, and the two first connecting shafts 21 are coaxially disposed.

In some other examples, alternatively, only one first connecting shaft 21 may be disposed, and the first connecting shaft 21 penetrates the seat cushion bracket 20. Two ends of the first connecting shaft 21 are respectively located in the guide sliding grooves 111a of the two support plates 11.

As shown in FIG. 1, the support plate 11 includes a main body portion 111 and a connecting portion 112. The guide sliding groove 111a is located on the main body portion 111, and the connecting portion 112 is connected to one side edge of the main body portion 111. The backrest bracket 30 is hingedly connected to the connecting portion 112.

The guide sliding groove 111a is disposed on the main body portion 111, and the main body portion 111 is configured to mount the seat cushion bracket 20. The connecting rod 40 may also be rotatably connected to the main body portion 111. The connecting portion 112 is configured to mount the backrest bracket 30. A structure of the connecting portion 112 only needs to be connected to the backrest bracket 30 and enable the backrest bracket 30 to rotate relative to the base 10.

For example, the connecting portion 112 may be provided with a connecting hole 112a. A second connecting shaft 31 may be connected to a side that is of the backrest bracket 30 and that is close to the connecting portion 112, and the second connecting shaft 31 is inserted into the connecting hole 112a, so that the backrest bracket 30 can rotate relative to the base 10 around the second connecting shaft 31.

In some examples, second connecting shafts 31 may be respectively disposed on two sides of the backrest bracket 30, that is, two second connecting shafts 31 are disposed. The two second connecting shafts 31 are respectively located in connecting holes 112a on connecting portions 112 of the two support plates 11, and the two second connecting shafts 31 are coaxially disposed.

In some other examples, alternatively, only one second connecting shaft 31 may be disposed, and the second connecting shaft 31 penetrates the backrest bracket 30. Two ends of the second connecting shaft 31 are respectively located in the connecting holes 112a on the connecting portions 112 of the two support plates 11.

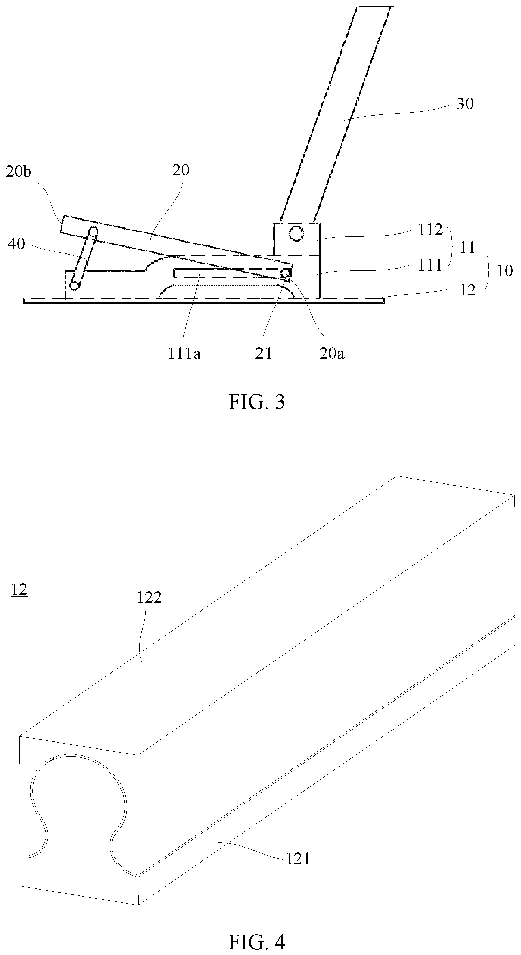

FIG. 3 is a side view of the seat assembly according to an embodiment of this application. As shown in FIG. 3, in the seat assembly, the base (10) further includes a first sliding rail (12). The first sliding rail (12) is connected to the support plate (11).

In this embodiment of this application, the base 10 includes two support plates 11 and two first sliding rails 12. The two first sliding rails 12 are connected to the two support plates 11 in a one-to-one correspondence.

The first sliding rail 12 is located at the bottom of the support plate 11. The bottom of the support plate 11 herein is a lower part of the support plate 11 when the seat is placed upright.

The first sliding rail 12 is connected to the support plate 11, so that the seat assembly can be mounted in the vehicle by using the first sliding rail 12, and the seat assembly can move relative to the vehicle by using the first sliding rail 12, thereby adjusting a position of the seat in the vehicle. For example, this enables the seat to move in a front-rear direction of the vehicle, to adjust the position in the front-rear direction.

In an example, FIG. 4 is a diagram of a structure of the first sliding rail according to an embodiment of this application. As shown in FIG. 4, the first sliding rail 12 may include a fastening portion 121 and a sliding portion 122. The sliding portion 122 is slidably connected to the fastening portion 122, and the sliding portion 122 can slide relative to the fastening portion 121. The sliding portion 122 is connected to the support plate 11, and the fastening portion 121 is configured to be mounted on floor in the vehicle, so that the seat assembly can slide relative to the floor in the vehicle.

For example, the fastening portion 121 may be fastened on the floor in the vehicle by using a bolt, or may be fastened through welding or the like. The sliding portion 122 may alternatively be connected to the support plate 122 by using a bolt, or may be welded to the support plate 122 through welding.

As shown in FIG. 3, the length direction of the guide sliding groove 111a on the support plate 11 is parallel to the first sliding rail 12.

The guide sliding groove 111a guides movement of the seat cushion bracket 20. When the seat cushion bracket 20 moves relative to the base 10, the first connecting shaft 21 moves in the length direction of the guide sliding groove 111a. The length direction of the guide sliding groove 111a is arranged in parallel to the first sliding rail 12. In this way, after the seat assembly is mounted by using the first sliding rail 12, with reference to a position of the first sliding rail 12, a height of the first connecting shaft 21 always remains unchanged in a movement process of the seat cushion bracket 20.

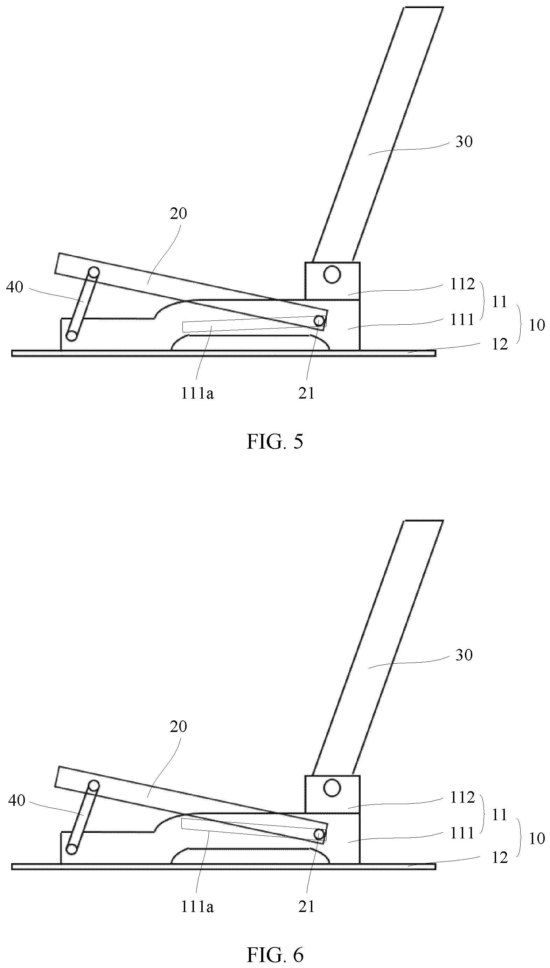

FIG. 5 is a side view of the seat assembly according to an embodiment of this application. As shown in FIG. 5, in this example, the length direction of the guide sliding groove 111a on the support plate 11 is at an acute angle with the first sliding rail 12.

An included angle between the length direction of the guide sliding groove 111a and the first sliding rail 12 is a minimum positive angle between the length direction of the guide sliding groove 111a and the first sliding rail 12. For example, two intersected straight lines form two angles on one side of any straight line. A sum of the two angles is 180°, and an angle with a smaller degree is an included angle between the two straight lines. That is, a maximum included angle is 90°. In this example, the included angle between the length direction of the guide sliding groove 111a and the first sliding rail 12 is less than 90°.

In this example, after the seat assembly is mounted by using the first sliding rail 12, with reference to a position of the first sliding rail 12, a height of the first connecting shaft 21 continuously changes in a movement process of the seat cushion bracket 20. This may make a height of the seat assembly change.

In the example shown in FIG. 5, a height of an end that is of the guide sliding groove 111a and that is close to the connecting rod 40 is less than a height of an end that is of the guide sliding groove 111a and that is close to the backrest bracket 30. In this way, when the seat cushion bracket 20 is close to the backrest bracket 30, a height of the seat cushion bracket 20 is increased. When the seat cushion bracket 20 is away from the backrest bracket 30, the height of the seat cushion bracket 20 is reduced, so that when the backrest bracket 30 is folded down, the seat cushion bracket 20 can free up more space for accommodating the backrest. This further helps reduce an overall height of the seat after the backrest is folded down, reduce occupied space in the vehicle, increase space for passenger movement, and reduce obstruction of another passenger's field of vision.

FIG. 6 is a side view of the seat assembly according to an embodiment of this application. Compared with the example shown in FIG. 5, in the example shown in FIG. 6, a height of an end that is of the guide sliding groove 111a and that is close to the connecting rod 40 is greater than a height of an end that is of the guide sliding groove 111a and that is close to the backrest bracket 30. In this way, when the seat cushion bracket 20 is close to the backrest bracket 30, a height of the rear edge 20a of the seat cushion bracket 20 is reduced. When a passenger sits on the seat, a center of gravity of the body may be closer to the backrest, and the body may be more reclined, thereby helping improve seat comfort.

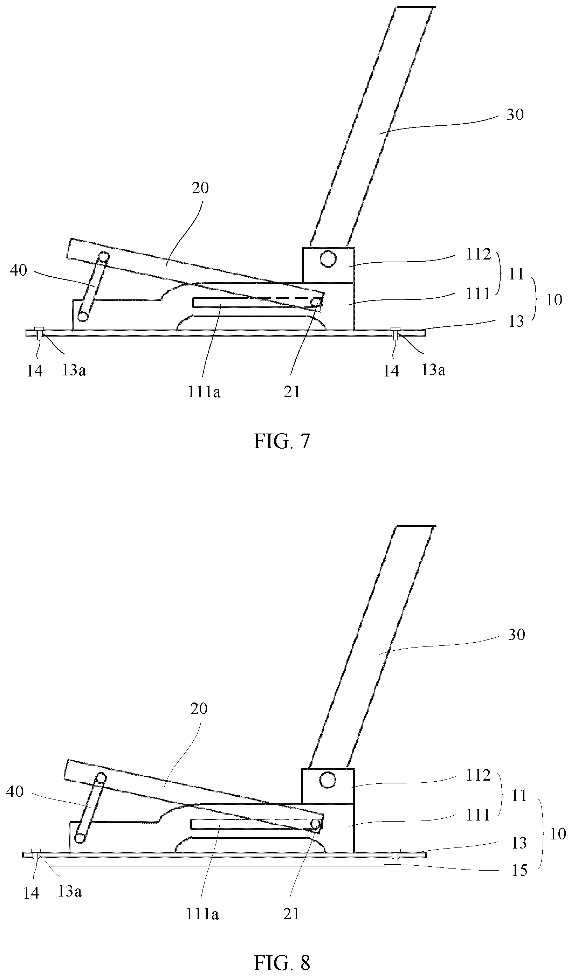

FIG. 7 is a side view of the seat assembly according to an embodiment of this application. As shown in FIG. 7, in the seat assembly, the base 10 further includes a bottom plate 13. The two support plates 11 are located on a same surface of the bottom plate 13, and the two support plates 11 are perpendicularly connected to the bottom plate 13.

The bottom plate 13 is located at the bottom of the two support plates 11, and the bottom plate 13 may be disposed to make a structure of the base 10 more stable. When the seat assembly is mounted in the vehicle, the bottom plate 13 can be fastened on floor in the vehicle, so that the seat assembly is firmly connected to the vehicle.

For example, the bottom plate 13 may be provided with a plurality of fastening holes 13a, and the bottom plate 13 may be fastened on the floor in the vehicle by using bolts 14.

In some examples, the length direction of the guide sliding groove 111a on the support plate 11 is parallel to the bottom plate 13. In this way, after the seat assembly is mounted by using the bottom plate 13, with reference to a position of the bottom plate 13, a height of the first connecting shaft 21 always remains unchanged in a movement process of the seat cushion bracket 20.

In some other examples, the length direction of the guide sliding groove 111a on the support plate 11 is at an acute angle with the bottom plate 13. An included angle between the length direction of the guide sliding groove 111a and the bottom plate 13 is a minimum positive angle between the length direction of the guide sliding groove 111a and the bottom plate 13. That is, a maximum included angle is 90°. In this example, the included angle between the length direction of the guide sliding groove 111a and the bottom plate 13 is less than 90°. In this way, the height of the first connecting shaft 21 continuously changes in the movement process of the seat cushion bracket 20. This may make a height of the seat assembly change.

FIG. 8 is a side view of the seat assembly according to an embodiment of this application. Compared with the seat assembly shown in FIG. 7, in the seat assembly shown in FIG. 8, the base 10 further includes a second sliding rail 15. The second sliding rail 15 is located on a surface that is of the bottom plate 13 and that is away from the support plate 11. In addition, the second sliding rail 15 is connected to the bottom plate 13.

The second sliding rail 15 is disposed at the bottom of the bottom plate 13, that is, the surface that is of the bottom plate 13 and that is away from the support plate 11. In this way, when the seat assembly is mounted in the vehicle, the bottom plate 13 may be not connected to floor in the vehicle, but the second sliding rail 15 is selected for mounting, so that a position of the seat in the vehicle can be adjusted. For example, in the example shown in FIG. 8, the second sliding rail 15 is perpendicular to the first connecting shaft 21. This enables the seat to move in a front-rear direction of the vehicle, to adjust the position in the front-rear direction.

In some other examples, the second sliding rail 15 may alternatively be disposed in another direction. For example, the second sliding rail 15 is disposed in parallel to the first connecting shaft 21, so that the seat can move in a left-right direction of the vehicle.

In addition, because both the bottom plate 13 and the second sliding rail 15 are disposed, when the position of the seat does not need to be adjusted, the bottom plate 13 can be further connected to a vehicle body, to lock the seat, so that the seat is more stable. For example, the bottom plate 13 is connected to the floor in the vehicle by using bolts 14.

As an example, the second sliding rail 15 may alternatively include a fastening portion and a sliding portion. For a structure of the second sliding rail 15, refer to the first sliding rail 12 shown in FIG. 4. Details are not described herein again.

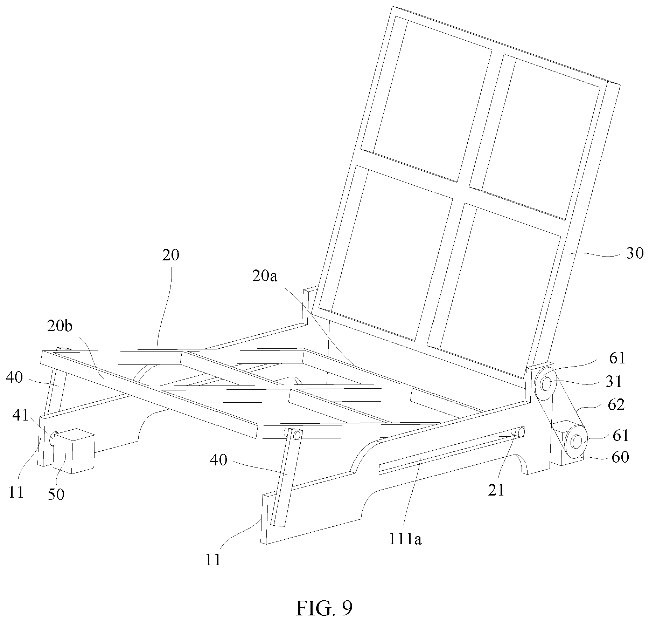

FIG. 9 is a diagram of a structure of the seat assembly according to an embodiment of this application. As shown in FIG. 9, the seat assembly may further include a first driving mechanism 50. The first driving mechanism 50 is connected to the connecting rod 40 through transmission, and the first driving mechanism 50 is configured to drive the connecting rod 40 to rotate relative to the base 10.

The first driving mechanism 50 is disposed to drive the connecting rod 40, to drive the seat cushion bracket 20 to move relative to the base 10 in a direction close to or away from the backrest bracket 30, thereby facilitating adjustment of the seat.

For example, the first driving mechanism 50 may include a motor and a gearbox. A rotating shaft of the motor is connected to an input shaft of the gearbox. An output shaft of the gearbox may be connected to the connecting rod 40 through transmission, and the motor drives the connecting rod 40 to rotate by using the gearbox.

The first driving mechanism 50 may further include a brake. The brake is configured to brake the motor or the gearbox, to lock the connecting rod 40, thereby locking a position of the seat cushion bracket 20.

In an example, the connecting rod 40 may be connected to the base 10 by using a third connecting shaft 41, the connecting rod 40 is fastened to the third connecting shaft 41, and the third connecting shaft 41 is rotatably connected to the support plates 11. The third connecting shaft 41 is connected to the output shaft of the gearbox, and the output shaft of the gearbox drives the third connecting shaft 41 to rotate, to drive the connecting rod 40 to rotate.

Optionally, the first driving mechanism 50 may be disposed under the seat cushion bracket 20 and between the two support plates 11, to further save space.

The seat assembly shown in FIG. 7 is used as an example. The first driving mechanism 50 may be mounted on the bottom plate 13, is located on a side that is of the bottom plate 13 and that is close to the seat cushion bracket 20, and is located between the two support plates 11.

As shown in FIG. 9, the seat assembly may further include a second driving mechanism 60. The second driving mechanism 60 is connected to the backrest bracket 30 through transmission, and the second driving mechanism 60 is configured to drive the backrest bracket 30 to rotate relative to the base 10.

The second driving mechanism 60 is disposed to drive the backrest bracket 30, to drive the backrest bracket 30 to rotate relative to the base 10, thereby facilitating adjustment of an angle of the backrest.

A structure of the second driving mechanism 60 may be the same as a structure of the first driving mechanism 50, and the second driving mechanism 60 also includes a motor and a gearbox. A rotating shaft of the motor is connected to an input shaft of the gearbox through transmission. An output shaft of the gearbox is connected to the second connecting shaft 31 through transmission. The second driving mechanism 60 may also include a brake. The brake is configured to brake the motor or the gearbox, to lock a position of the backrest bracket 30.

Optionally, the second driving mechanism 60 may be disposed under the backrest bracket 30 and between the two support plates 11, to save space.

The seat assembly shown in FIG. 7 is used as an example. The second driving mechanism 60 may alternatively be mounted on the bottom plate 13, is located on a side that is of the bottom plate 13 and that is close to the backrest bracket 30, and is located between the two support plates 11.

In some examples, the second driving mechanism 60 may alternatively be disposed behind the two support plates 11, that is, on sides that are of the two support plates 11 and that are away from the front edge 20b of the seat cushion bracket 20, to prevent the second driving mechanism 60 from occupying space under the backrest bracket 30, and affecting movement of the backrest bracket 30.

For example, the second driving mechanism 60 is connected to the second connecting shaft 31 through transmission by using a transmission mechanism, for example, in a transmission connection by using a chain. In an example, sprocket wheels 61 are respectively disposed on the output shaft of the gearbox and the second connecting shaft 31. The sprocket wheel 61 on the output shaft of the gearbox is connected to the sprocket wheel 61 on the second connecting shaft 31 by using a chain 62. In another example, the second driving mechanism 60 may alternatively be connected to the second connecting shaft 31 through transmission by using a gear mechanism.

In this embodiment of this application, the two driving mechanisms are disposed to respectively control the seat cushion bracket 20 and the backrest bracket 30, so that the seat cushion bracket 20 and the backrest bracket 30 can be separately adjusted, thereby facilitating use of the seat.

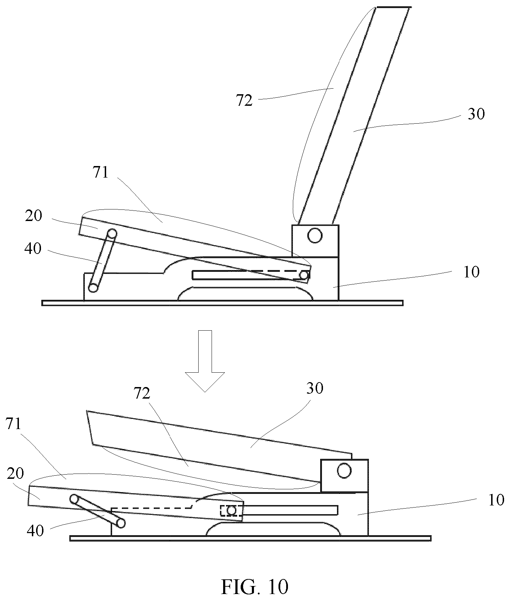

FIG. 10 is a diagram of a structure of a seat according to an embodiment of this application. As shown in FIG. 10, the seat includes a seat cushion pad 71, a backrest cushion pad 72, and any seat assembly shown in FIG. 1 to FIG. 9. The seat cushion pad 71 is connected to the seat cushion bracket 20, and the backrest cushion pad 72 is connected to the backrest bracket 30.

The seat cushion pad 71 and the seat cushion bracket 20 form a seat cushion of the seat, and the backrest cushion pad 72 and the backrest bracket 30 form a backrest of the seat. Both the seat cushion pad 71 and the backrest cushion pad 72 may be flexible. The seat cushion pad 71 may wrap or cover the seat cushion bracket 20, and the backrest cushion pad 72 may wrap or cover the backrest bracket 30.

In an example, as shown in FIG. 10, the seat cushion pad 71 may be disposed on an upper surface of the seat cushion bracket 20, that is, a surface that is of the seat cushion bracket 20 and that is close to the backrest bracket 30, or a surface that is of the seat cushion bracket 20 and that is close to the upper part when the seat is placed upright. The backrest cushion pad 72 is located on a surface that is of the backrest bracket 30 and that is close to the seat cushion bracket 20. When the backrest bracket 30 is folded down, the backrest cushion pad 72 and the seat cushion pad 71 are opposite to each other.

Surfaces of the seat cushion pad 71 and the backrest cushion pad 72 are usually not flat. For example, in FIG. 10, the middle part of the backrest cushion pad 72 protrudes, to better support the waist and the back of a passenger. The seat cushion bracket 20 may move in a direction away from the backrest bracket 30. Therefore, when the backrest is folded down, the seat cushion bracket 20 first moves in the direction away from the backrest bracket 30, so that large space is reserved at a rear edge 20a of the seat cushion bracket 20. After the backrest is folded down, a protrusive part on the surface of the backrest cushion pad 72 is just located in the space reserved at the rear edge 20a of the seat cushion bracket 20. This helps reduce an overall height of the seat after the backrest is folded down.

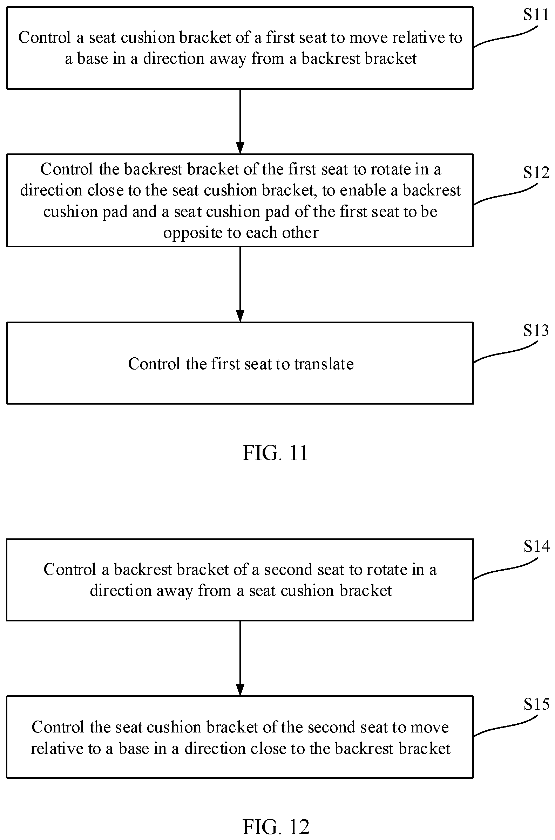

FIG. 11 is a flowchart of a seat control method according to an embodiment of this application. The seat may be a seat in a transportation means, for example, a vehicle seat, or may be an indoor seat, for example, a seat in a cinema or a seat in a conference room. The following uses a vehicle as an example to describe the control method. However, this does not indicate that the method is applicable only to the transportation means. The vehicle includes a first seat. The first seat may be any seat in the vehicle. For example, the first seat may be a front seat or a rear seat in the vehicle. For a vehicle including three or more rows of seats, the first seat may also be a seat between the front seat and the rear seat. The first seat is the seat shown in FIG. 10. As shown in FIG. 11, the control method includes the following steps.

In step S11, a seat cushion bracket 20 of the first seat is controlled to move relative to a base 10 in a direction away from a backrest bracket 30.

In step S12, the backrest bracket 30 of the first seat is controlled to rotate in a direction close to the seat cushion bracket 20, to enable a backrest cushion pad 72 and a seat cushion pad 71 of the first seat to be opposite to each other.

First, the seat cushion bracket 20 of the first seat is controlled to be away from the backrest bracket 30, and space is reserved between a rear edge 20a of the seat cushion bracket 20 and the backrest bracket 30. Then, the backrest bracket 30 is controlled to rotate in the direction close to the seat cushion bracket 20, and the backrest is folded down. This helps reduce an overall height of the seat after the backrest is folded down, reduce occupied space in the vehicle, increase space for passenger movement, and reduce obstruction of another passenger's field of vision.

Optionally, the method may further include the following optional steps.

In step S13, the first seat is controlled to translate.

For example, the first seat is controlled to move forward or backward.

In the example shown in FIG. 11, step S13 is performed after step S12. However, in another example, step S13 may also be performed before step S12 or before step S11, or may be simultaneously performed with step S11 or step S12. A position of the first seat in the transportation means can be adjusted through step S13.

In this embodiment of this application, moving forward is moving towards the front of the transportation means, and moving backward is moving towards the rear of the transportation means. For example, the vehicle is used as an example. Moving the first seat forward means that the first seat moves in a direction close to the head of the vehicle, and moving the first seat backward means that the first seat moves in a direction close to the rear of the vehicle.

Usually, there is more than one seat in the vehicle. For example, the vehicle may further include a second seat, and the second seat may be any seat other than the first seat. The second seat may also be the seat shown in FIG. 10. FIG. 12 is a flowchart of the seat control method according to an embodiment of this application. The method is used to further control the second seat on a basis of controlling the first seat. When the seat is controlled, as shown in FIG. 12, the control method may further include the following optional steps.

In step S14, a backrest bracket 30 of the second seat is controlled to rotate in a direction away from a seat cushion bracket 20.

In step S15, the seat cushion bracket 20 of the second seat is controlled to move relative to the base 10 in a direction close to the backrest bracket 30.

Step S14 may be performed after step S12, or may be simultaneously performed with step S11 or step S12. The second seat is controlled to be unfolded through step S14 and step S15, so that a passenger can normally sit on the second seat.

In addition, for the second seat, the second seat may also be controlled to move forward or move backward, to adjust a position of the second seat in the transportation means.

An embodiment of this application further provides a seat control apparatus. The seat control apparatus includes a seat control module. The seat control module is configured to perform the control method shown in FIG. 11 or FIG. 12. The seat control module is configured to: control a seat cushion bracket of a first seat to move relative to a base in a direction away from a backrest bracket; and control the backrest bracket of the first seat to rotate in a direction close to the seat cushion bracket, to enable a backrest cushion pad and a seat cushion pad of the first seat to be opposite to each other. That is, the seat control module is configured to perform the foregoing step S11 and step S12.

Optionally, the seat control module is further configured to control the first seat to translate. That is, the seat control module is further configured to perform the foregoing step S13, to control the first seat to translate, to facilitate use of the seat.

In addition, for a device that includes both the first seat and a second seat, the seat control module is further configured to: control a backrest bracket of the second seat to rotate in a direction away from a seat cushion bracket; and control the seat cushion bracket of the second seat to move relative to a base in a direction close to the backrest bracket. That is, the seat control module is further configured to perform the foregoing step S14 and step S15.

The foregoing seat control apparatus and the seat control method belong to a same concept. For a specific implementation process, refer to the method embodiments. Details are not described herein again.

The seat control apparatus may be a vehicle-mounted computer. That is, the foregoing control is performed on the seat by using the vehicle-mounted computer. The seat control module is a function module in the vehicle-mounted computer. The seat control apparatus may also be a controller specially configured to control the seat, and the seat control module may be a function module in the controller. The controller may be disposed on a dashboard, a side of the seat, a vehicle door, or a center console storage box.

The seat control apparatus may perform the foregoing method in response to a corresponding instruction. For example, the instruction may be a control instruction triggered by a user by using a virtual operation key or a physical operation key, or may be a control instruction triggered by using a speech recognition technology.

An embodiment of this application further provides a transportation means. The transportation means may be but is not limited to a vehicle, an airplane, or a ship. The transportation means includes the seat assembly shown in FIG. 1 to FIG. 9, or the seat shown in FIG. 10. For example, the vehicle may include an intelligent vehicle, a connected vehicle, or a new energy vehicle.

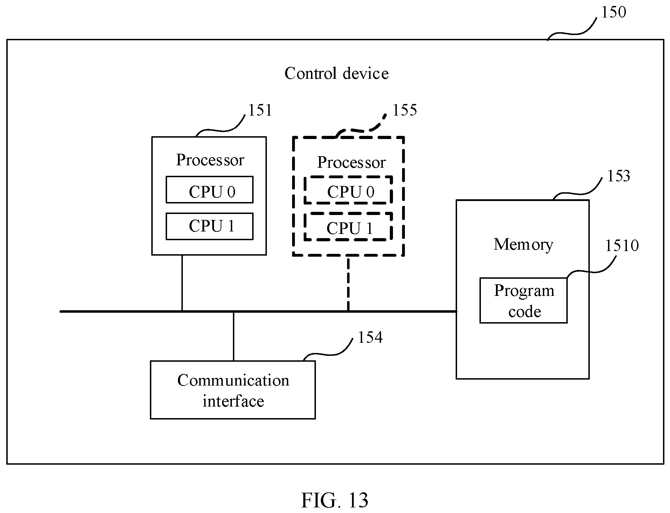

FIG. 13 is a diagram of a structure of a control device according to an embodiment of this application. The control device 150 shown in FIG. 13 is configured to perform operations related to the seat control method shown in either of FIG. 11 and FIG. 12. The control device 150 may be implemented by using a general bus architecture.

As shown in FIG. 13, the control device 150 includes at least one processor 151, a memory 153, and at least one communication interface 154.

The processor 151 is, for example, a general-purpose central processing unit (central processing unit, CPU), a digital signal processor (digital signal processor, DSP), a network processor (network processor, NP), a data processing unit (Data Processing Unit, DPU), a microprocessor, or one or more integrated circuits configured to implement the solutions of this application. For example, the processor 151 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks described with reference to content disclosed in embodiments of this application. Alternatively, the processor may be a combination of processors implementing a computing function, for example, a combination of one or more microprocessors, or a combination of a DSP and a microprocessor.

Optionally, the control device 150 further includes a bus. The bus is configured to transfer information between the components of the control device 150. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one bold line is used to represent the bus in FIG. 13, but this does not mean that there is only one bus or only one type of bus.

The memory 153 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 153 exists independently, and is connected to the processor 151 through the bus. The memory 153 may alternatively be integrated with the processor 151.

The communication interface 154 uses any apparatus such as a transceiver, and is configured to communicate with another device or a communication network. The communication network may be an Ethernet, a radio access network (RAN), a wireless local area network (wireless local area network, WLAN), or the like. The communication interface 154 may include a wired communication interface, and may further include a wireless communication interface. Specifically, the communication interface 154 may be an Ethernet (ethernet) interface, a fast Ethernet (fast ethernet, FE) interface, a gigabit Ethernet (gigabit ethernet, GE) interface, an asynchronous transfer mode (asynchronous transfer mode, ATM) interface, a wireless local area network interface, a cellular network communication interface, or a combination thereof. The Ethernet interface may be an optical interface, an electrical interface, or a combination thereof. In this embodiment of this application, the communication interface 154 may be used by the control device 150 to communicate with another device.

During specific implementation, in an embodiment, the processor 151 may include one or more CPUs, for example, a CPU 0 and a CPU 1 shown in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the control device 150 may include a plurality of processors, for example, the processor 151 and a processor 155 shown in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the control device 150 may further include an output device and an input device. The output device communicates with the processor 151, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 151, and may receive an input of a user in a plurality of manners. For example, the input device may be a mouse, a keyboard, a touchscreen device, a sensor device, or the like.

In some embodiments, the memory 153 is configured to store program code 1510 for executing the solutions of this application, and the processor 151 may execute the program code 1510 stored in the memory 153. That is, the control device 150 may execute the program code 1510 in the memory 153 by using the processor 151, to implement the methods provided in the method embodiments. The program code 1510 may include one or more software modules. Optionally, the processor 151 may also store program code or instructions for executing the solutions of this application.

In a specific embodiment, the control device 150 in this embodiment of this application may correspond to the controller in the foregoing method embodiments. The processor 151 in the control device 150 reads instructions in the memory 153, so that the control device 150 shown in FIG. 13 can perform all or some operations performed by the controller.

Specifically, the processor 151 is configured to: control a seat cushion bracket 20 of a first seat to move relative to a base 10 in a direction away from a backrest bracket 30; and control the backrest bracket 30 of the first seat to rotate in a direction close to the seat cushion bracket 20, to enable a backrest cushion pad 72 and a seat cushion pad 71 of the first seat to be opposite to each other.

For brevity, another optional implementation is not described herein again.

Steps of the seat control method shown in either of FIG. 11 and FIG. 12 are completed by using an integrated logic circuit of hardware or instructions in a form of software in the processor of the control device 150. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with the hardware of the processor. To avoid repetition, details are not described herein again.

An embodiment of this application further provides a chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing seat control methods.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an ARM architecture.

Further, in an optional embodiment, there are one or more processors and one or more memories. Optionally, the memory and the processor may be integrated together, or the memory and the processor may be separately disposed. The memory may include a read-only memory and a random access memory, and provide instructions and data for the processor. The memory may further include a nonvolatile random access memory. For example, the memory may further store a reference block and a target block.

The memory may be a volatile memory or a nonvolatile memory, or may include both a volatile memory and a nonvolatile memory. The nonvolatile memory may be a ROM, a PROM, an EPROM, an EEPROM, or a flash memory. The volatile memory may be a RAM, and serves as an external cache. By way of example rather than limitative description, many forms of RAMs are available, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by a control device, the control device is enabled to perform the seat control method provided above.

An embodiment of this application further provides a computer program product including instructions. When the computer program product is run on a control device, the control device is enabled to perform the seat control method provided above.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, a compact disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

The foregoing descriptions are merely embodiments of this application, but are not intended to limit this application. Any modification, equivalent replacement, or improvement made without departing from the spirit and principle of this application should fall within the protection scope of this application.

## Claims

1. A seat assembly, comprising a base (10), a seat cushion bracket (20), a backrest bracket (30), and a connecting rod (40), wherein
the backrest bracket (30) is rotatably connected to the base (10);
the seat cushion bracket (20) is able to move relative to the base (10) in a direction close to or away from the backrest bracket (30), and is movably connected to the base (10), the seat cushion bracket (20) has a rear edge (20a) close to the backrest bracket (30) and a front edge (20b) opposite to the rear edge (20a), and a first joint between the seat cushion bracket (20) and the base (10) is close to the rear edge (20a); and
one end of the connecting rod (40) is rotatably connected to the seat cushion bracket (20) at a second joint, the second joint is close to the front edge (20b), and the other end of the connecting rod (40) is rotatably connected to the base (10).

2. The seat assembly according to claim 1, wherein the base (10) comprises two support plates (11), the two support plates (11) are disposed opposite to each other, the support plate (11) is provided with a guide sliding groove (111a), and a length direction of the guide sliding groove (111a) is the same as a moving direction of the seat cushion bracket (20); and
the seat cushion bracket (20) is located between the two support plates (11), a first connecting shaft (21) is disposed on a side that is of the seat cushion bracket (20) and that is close to the support plate (11), and the first connecting shaft (21) is located in the guide sliding groove (111a).

3. The seat assembly according to claim 2, wherein the support plate (11) comprises a main body portion (111) and a connecting portion (112), and the guide sliding groove (111a) is located on the main body portion (111), the connecting portion (112) is connected to one side edge of the main body portion (111), and the backrest bracket (30) is hingedly connected to the connecting portion (112).

4. The seat assembly according to claim 2 or 3, wherein the base (10) further comprises a first sliding rail (12), and the first sliding rail (12) is connected to the support plate (11).

5. The seat assembly according to claim 4, wherein the length direction of the guide sliding groove (111a) is parallel to or at an acute angle with the first sliding rail (12).

6. The seat assembly according to claim 2 or 3, wherein the base (10) further comprises a bottom plate (13), and the two support plates (11) are located on a same surface of the bottom plate (13) and are perpendicularly connected to the bottom plate (13).

7. The seat assembly according to claim 6, wherein the length direction of the guide sliding groove (111a) is parallel to or at an acute angle with the bottom plate (13).

8. The seat assembly according to claim 6 or 7, wherein the base (10) further comprises a second sliding rail (15), and the second sliding rail (15) is located on a surface that is of the bottom plate (13) and that is away from the support plate (11), and is connected to the bottom plate (13).

9. The seat assembly according to any one of claims 1 to 8, further comprising a first driving mechanism (50), wherein the first driving mechanism (50) is connected to the connecting rod (40) through transmission, and is configured to drive the connecting rod (40) to rotate relative to the base (10).

10. The seat assembly according to any one of claims 1 to 9, further comprising a second driving mechanism (60), wherein the second driving mechanism (60) is connected to the backrest bracket (30) through transmission, and is configured to drive the backrest bracket (30) to rotate relative to the base (10).

11. A seat, comprising a seat cushion pad (71), a backrest cushion pad (72), and the seat assembly according to any one of claims 1 to 10, wherein the seat cushion pad (71) is connected to the seat cushion bracket (20), and the backrest cushion pad (72) is connected to the backrest bracket (30).

12. A seat control method, wherein the method comprises:
controlling a seat cushion bracket (20) of a first seat to move relative to a base (10) in a direction away from a backrest bracket (30), wherein the first seat is the seat according to claim 11; and
controlling the backrest bracket (30) of the first seat to rotate in a direction close to the seat cushion bracket (20), to enable a backrest cushion pad (72) and a seat cushion pad (71) of the first seat to be opposite to each other.

13. The seat control method according to claim 12, wherein the method further comprises:
controlling the first seat to translate.

14. The seat control method according to claim 12 or 13, wherein the method further comprises:
controlling a backrest bracket (30) of a second seat to rotate in a direction away from a seat cushion bracket (20), wherein the second seat is the seat according to claim 11; and
controlling the seat cushion bracket (20) of the second seat to move relative to a base (10) in a direction close to the backrest bracket (30).

15. A seat control apparatus, comprising:
a seat control module, configured to: control a seat cushion bracket (20) of a first seat to move relative to a base (10) in a direction away from a backrest bracket (30), wherein the first seat is the seat according to claim 11; and control the backrest bracket (30) of the first seat to rotate in a direction close to the seat cushion bracket (20), to enable a backrest cushion pad (72) and a seat cushion pad (71) of the first seat to be opposite to each other.

16. The seat control apparatus according to claim 15, wherein the seat control module is further configured to control the first seat to translate.

17. The seat control apparatus according to claim 15 or 16, wherein the seat control module is further configured to: control a backrest bracket (30) of a second seat to rotate in a direction away from a seat cushion bracket (20), wherein the second seat is the seat according to claim 11; and control the seat cushion bracket (20) of the second seat to move relative to a base (10) in a direction close to the backrest bracket (30).

18. A transportation means, comprising at least one seat according to claim 11.

19. A control device, wherein the control device comprises a processor and a memory, the memory is configured to store a software program, and the processor runs or executes the software program stored in the memory, to enable the control device to implement the method according to any one of claims 12 to 14.

20. A computer-readable storage medium, wherein the computer-readable storage medium is configured to store program code executed by a processor, and the program code comprises instructions used to implement the method according to any one of claims 12 to 14.

21. A computer program product, comprising program code, wherein when a computer runs the computer program product, the computer is enabled to perform the method according to any one of claims 12 to 14.
